(19) Europäisches Patentamt European Patent Office Office européen des brevets

(11) **EP 3 920 178 B1**

(12) **EUROPEAN PATENT SPECIFICATION**

(45) Date of publication and mention of the grant of the patent:
**06.11.2024 Bulletin 2024/45**

(21) Application number: **20748958.4**

(22) Date of filing: **14.01.2020**

(51) International Patent Classification (IPC):
**G10L 15/16** (2006.01)     **G10L 15/06** (2013.01)
**G10L 17/08** (2013.01)     **G06N 3/048** (2023.01)
**G06N 3/045** (2023.01)     **G06N 3/084** (2023.01)
**G06N 3/044** (2023.01)

(52) Cooperative Patent Classification (CPC):
**G10L 15/063; G06N 3/044; G06N 3/045;**
**G06N 3/048; G06N 3/084; G10L 15/16;**
G10L 2015/0635

(86) International application number:
**PCT/CN2020/072063**

(87) International publication number:
**WO 2020/156153 (06.08.2020 Gazette 2020/32)**

(54) **AUDIO RECOGNITION METHOD AND SYSTEM, AND DEVICE**

VERFAHREN UND SYSTEM ZUR AUDIOERKENNUNG SOWIE VORRICHTUNG

PROCÉDÉ ET SYSTÈME DE RECONNAISSANCE AUDIO ET DISPOSITIF

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.01.2019  CN 201910087286**

(43) Date of publication of application:
**08.12.2021  Bulletin 2021/49**

(73) Proprietor: **Tencent Technology (Shenzhen)**
**Company Limited**
**Shenzhen, Guangdong, 518057 (CN)**

(72) Inventors:
• **SU, Dan**
  **Shenzhen, Guangdong 518057 (CN)**
• **WANG, Jun**
  **Shenzhen, Guangdong 518057 (CN)**
• **CHEN, Jie**
  **Shenzhen, Guangdong 518057 (CN)**
• **YU, Dong**
  **Shenzhen, Guangdong 518057 (CN)**

(74) Representative: **Reddie & Grose LLP**
**The White Chapel Building**
**10 Whitechapel High Street**
**London E1 8QS (GB)**

(56) References cited:
CN-A- 105 551 483     CN-A- 105 551 483
CN-A- 108 766 445     CN-A- 109 256 139
CN-A- 109 859 743     US-A1- 2017 148 431
US-B1- 10 147 442

• **NA LI ET AL: "Deep Discriminative Embeddings**
  **for Duration Robust Speaker Verification",**
  **INTERSPEECH 2018, 6 September 2018**
  **(2018-09-06), ISCA, pages 1 - 5, XP055724143,**
  **DOI: 10.21437/Interspeech.2018-1769**
• **NA LI, DEYI TUO, DAN SU, ZHIFENG LI, AND**
  **DONG YU: "Deep Discriminative Embeddings for**
  **Duration Robust Speaker Verification",**
  **INTERSPEECH 2018, 6 September 2018**
  **(2018-09-06), pages 1 - 5, XP055724143, DOI:**
  **10.21437/Interspeech.2018-1769**
• **SARTHAK YADAV , ATUL RAI: "Learning**
  **Discriminative Features for Speaker**
  **Identification and Verification", INTERSPEECH**
  **2018, 6 September 2018 (2018-09-06), pages 2237**
  **- 2241, XP055724147, DOI:**
  **10.21437/Interspeech.2018-1015**

EP 3 920 178 B1

**Description**

FIELD OF THE TECHNOLOGY

The present disclosure relates to the technical field of computer acoustics application, and in particular, to a method and a device for training a neural network for audio recognition.

BACKGROUND OF THE DISCLOSURE

In acoustic scenarios, implementation of audio recognition refers to execution of various audio classification tasks, which is usually limited by variability of the acoustic scenarios. An example is automatic speech recognition on a basis of the audio recognition. Such a limitation makes it difficult to apply the audio recognition to various audio classification tasks. The variability of the acoustic scenarios is due to various factors, for example, speakers, accents, background noise, reverberation, soundtracks, and recording conditions.

With development of science and technology and substantial improvement in computing capabilities of hardware, the audio recognition is implemented based on neural networks, which still cannot ensure robustness to varying acoustic scenarios.

Li N. et al., "Deep Discriminative Embeddings for Duration Robust Speaker Verification", INTERSPEECH 2018, 6 September 2018, discloses a deep CNN-based algorithm for text-independent speaker verification, where discriminability of embeddings is enhanced by reducing intra-speaker variation with center loss and simultaneously increasing inter-discrepancy with softmax loss.

US 10,147,442 B1 discloses a neural network acoustic model trained by optimizing three outputs jointly, where the three outputs comprise a main acoustic output, a speech signal prediction, and an interference speech prediction.

CN 105551483 A discloses a speech recognition model, which is trained by using a sequence of feature vectors and a corresponding sequence of modelling labels, and blank labels are inserted into the sequence of modelling units for alignment between the two sequences.

SUMMARY

A method and a device for training a neural network for implementing audio recognition are provided according to embodiments of the present disclosure, in order to address an issue that a conventional neural network for implementing audio recognition lacks robustness to acoustic conditions which are unobserved in training or vary greatly. The invention is defined by the independent claims, to which reference should now be directed. Advantageous features are defined in the dependent claims.

The technical solutions according to embodiments of the present disclosure may achieve at least following beneficial effects.

For preset audios, the audio data stream is obtained for training the neural network for audio recognition. The audio data stream includes pieces of audio data that correspond to multiple time frames, respectively. The feature extraction is performed through each layer in the neural network under training, on the piece of audio data of each time frame in the audio data stream, so as to obtain the deep feature outputted based on each time frame. In such manner, the deep feature for the piece of audio data of each time frame is obtained, and the deep feature is configured to annotate the audio data stream and thereby recognize the audio data stream. On such basis, for the audio data stream, the index for measuring inter-class confusion and the penalty for measuring intra-class distances with respect to the preset labels in the annotation data are fused into the preset loss function based on the deep feature. Finally, a parameter of the neural network is updated based on the value of loss function obtained through fusion. For the neural network for audio recognition, a parameter of each layer in the network is updated based on the value of loss function value obtained through fusion, and the robustness of the final neural network to acoustic conditions that are unobserved in training and vary greatly is improved by integrating the inter-class confusion index and the intra-class distance penalty of the audio data stream with respect to the preset labels.

The inter-class confusion index of the audio data stream with respect to the preset labels ensures discrimination among different classes for the deep features in audio recognition. The intra-class distance penalty of the audio data stream with respect to the preset labels enhances a capability of recognizing the extracted deep feature in audio recognition. Therefore, on such basis, the fusion of the two ensures that the deep feature is provided with both inter-class discriminability and compact intra-class distribution. Thereby, greatly improved is robustness of the implemented neural network to acoustic conditions that are unobserved in training and vary greatly, and further improved are performances of audio recognition.

BRIEF DESCRIPTION OF THE DRAWINGS

The drawings incorporated herein constitute a part of this specification, illustrate embodiments consistent with the present disclosure, and serve to explain principles of the present disclosure in combination of the specification.

Figure 1 is a schematic diagram of an implementation environment according to an embodiment of the present disclosure;

Figure 2 is a structural block diagram of hardware of an audio recognition terminal according to an embodiment of the present disclosure;

Figure 3 is a flowchart of a method for training a neural network for audio recognition according to an embodiment of the present disclosure;

Figure 4 is a flowchart of a method for training a neural network for audio recognition according to another embodiment of the present disclosure;

Figure 5 is a flowchart for describing step 350 illustrated in an embodiment corresponding to Figure 3 according to an embodiment of the present disclosure;

Figure 6 is a flowchart for describing step 350 illustrated in an embodiment corresponding to Figure 3 according to another embodiment of the present disclosure;

Figure 7 is a flowchart of describing step 370 illustrated in an embodiment corresponding to Figure 3 according to an embodiment of the present disclosure;

Figure 8 is a schematic diagram of network architecture of a neural network in an automatic speech recognition system according to an embodiment of the present disclosure;

Figure 9 is a schematic diagram of forward propagation and backward propagation of error signal streams when a fusion-loss function supervises training of a neural network according to an embodiment of the present disclosure;

Figure 10 is a block diagram of a system for training a neural network for audio recognition according to an embodiment.

Figure 11 is a block diagram of a fusion calculating module illustrated in an embodiment corresponding to Figure 10 according to an embodiment of the present disclosure;

Figure 12 is a block diagram of a fusion calculating module illustrated in an embodiment corresponding to Figure 10 according to another embodiment of the present disclosure; and

Figure 13 is a block diagram of an updating module illustrated in an embodiment corresponding to Figure 10 according to an embodiment of the present disclosure.

DESCRIPTION OF EMBODIMENTS

Exemplary embodiments are described in detail herein, and examples of the embodiments are shown in the drawings. Unless otherwise indicated, same numbers in different drawings represent same or similar element when reference is made to the drawings in following descriptions. The implementations described in the following embodiments do not represent all implementations that are consistent with the present disclosure, but are merely examples of apparatuses and methods that are described in detail in the appended claims and that are consistent with some aspects of the present disclosure.

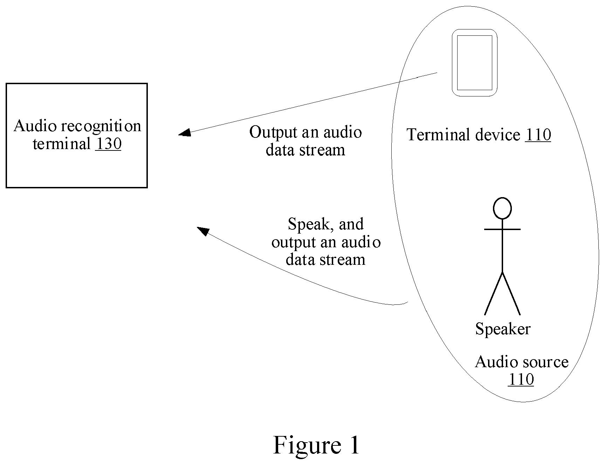

Figure 1 is a schematic diagram of an implementation environment according to an embodiment of the present disclosure. In an embodiment, the implementation environment includes an audio source 110 and an audio recognition terminal 130. A neural network is trained at the audio recognition terminal 130, based on an audio, such as a speech, provided by the audio source 110. Thereby, a neural network capable of audio recognition is obtained.

For example, the audio source 110 may be a speaker or a terminal device, as shown in Figure 1. The speaker speaks to output a piece of speech to the audio recognition terminal 130, or the terminal device plays audio to output a piece of audio to the audio recognition terminal 130.

The audio recognition terminal 130 may be a smart speaker, a smart TV, an online speech recognition system, or the like. In a process of training the neural network, the audio source 110 provides an audio data stream as training data for the training. Logic of training the neural network for audio recognition according to embodiments of the present disclosure is applicable to the audio recognition terminal 130, for training the neural network training based on audio inputted from the audio source 110. A specific framework of an implementation environment depends strongly on an implementation scenario. Different scenarios render different architecture deployments of the implementation environment, besides that including the audio source 110 and the audio recognition terminal 130.

The audio recognition terminal 130 is oriented to various audio sources 110, such example, devices with various applications. The various audio sources 110 provide audio data streams for training the neural network to the audio recognition terminal 130.

The neural network obtained through training is applicable to various scenarios, and implements audio recognition in these scenarios. The various scenarios are, for example, audio monitoring, speaker recognition, and human-computer interaction in security surveillance, which are not enumerated herein.

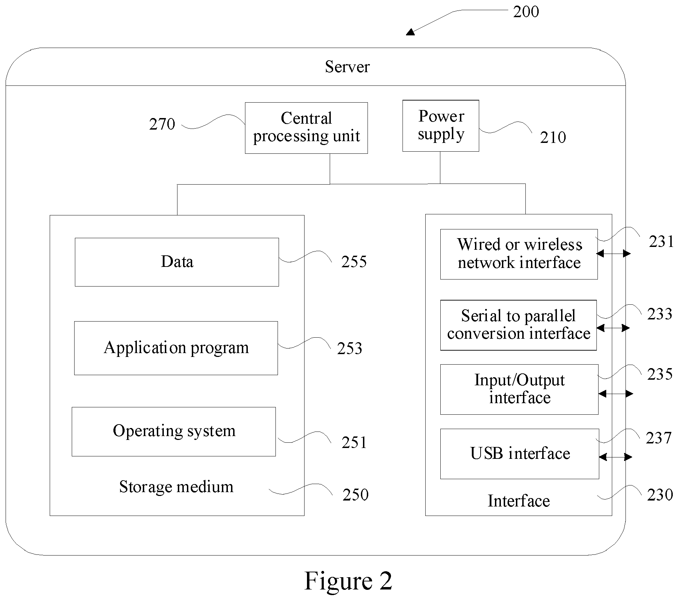

Figure 2 is a structural block diagram of hardware of an audio recognition terminal according to an embodiment. In an embodiment, the audio recognition terminal may be a server. It is understood that the audio recognition terminal may alternatively be a terminal device with excellent computing capabilities. Figure 2 is a structural block diagram of hardware of a server that serves as the audio recognition terminal according to an embodiment. The server 200 is merely an example adapted to the present disclosure, and should not be construed as any limitation to an application range of the present disclosure. Further, the server 200 should not be construed as necessary to depend on or have one or more components of the exemplary case as shown in Figure 2.

A hardware structure of the server 200 may vary greatly in case of different configurations or performances. As shown in Figure 2, the server 200 includes a power supply 210, an interface 230, at least one storage medium 250, and at least one central processing unit (CPU) 270.

The power supply 210 is configured to provide an operation voltage for hardware devices in the server 200.

The interface 230 includes at least one wired or wireless network interface 231, at least one serial-to-parallel conversion interface 233, at least one input/output interface 235, at least one USB interface 237, and the like, and is configured to communicate with an external device.

The storage medium 250, serving as a carrier of resource storage, may be a random storage medium, a magnetic disk, an optical disc, or the like. Resources stored thereon include an operating system 251, an application program 253, data 255, and the like. The storage may be transient storage or permanent storage. The operating system 251 is configured to manage and control various hardware devices on the server 200 and the application program 253, so as to implement computation and processing of the CPU 270 on the massive data 255. The operating system may be Windows Server™, Mac OS X™, Unix™, Linux™, FreeBSD™ or the like. The application program 253 is a computer program for implementing at least one specific task based on the operating system 251, and may include at least one module (not shown in Figure 2). Each module may include a series of instructions operating on the server 200. The data 255 may be photos, pictures, and the like, which is stored in a magnetic disk.

The central processing unit 270 may include one or more processors. The central processing unit 270 is configured to communicate with the storage medium 250 via a bus, and perform calculation and processing on the massive data 255 in the storage medium 250.

As described above in detail, the server 200 adapted to the present disclosure performs audio recognition by means of the CPU 270 reading a series of operation instructions stored in the storage medium 250.

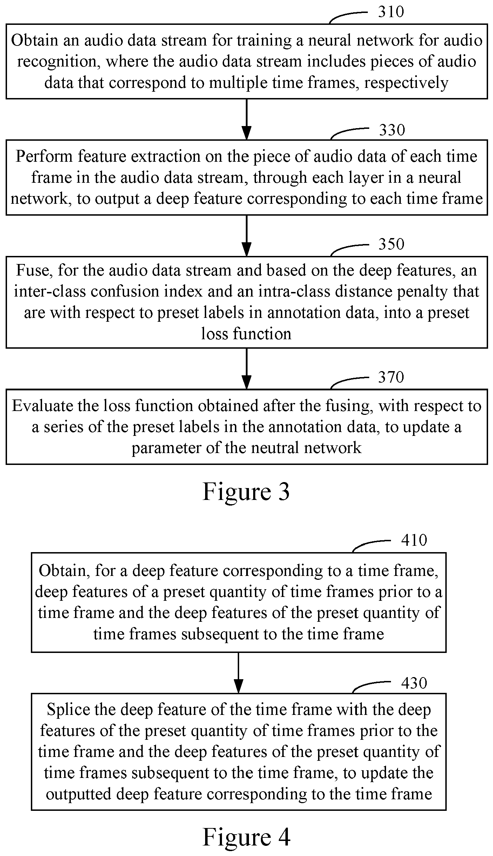

Figure 3 is a flowchart of a method for training a neural network for implementing audio recognition according to an embodiment. In an embodiment as shown in Figure 3, the method for training a neural network for implementing audio recognition includes at least following steps S310 to S370.

In step 310, an audio data stream is obtained for training a neural network for audio recognition. The audio data stream includes pieces of audio data that correspond to multiple time frames, respectively.

The audio data stream corresponding to audio may be obtained before training the neural network for recognizing such audio, so that the audio data stream may be applied in a subsequent process of training the neural network. The audio data stream embodies content of audio, and reflects a speaker delivering such content. The audio data stream is formed by frames of the audio data. Therefore, the audio data stream includes multiple pieces of audio data corresponding to the time frames. These pieces of audio data constitutes a time sequence, that is, the audio data stream corresponds to an audio data sequence that is formed based on a temporal order.

In an embodiment, the step 310 includes a following step. A continuous audio data stream including noise, and annotation data, are obtained as training data for the neural network.

Audio recognition may refer to classifying audio data streams. That is, an audio annotation is assigned to the audio data stream in a process of audio recognition, and such audio annotation indicates a category to which the audio data stream belongs. Therefore, a speaker corresponding to the audio data stream or a tag to which the content of the audio data stream pertains may be learned subsequently based on the audio annotation. Hence, when training the neural network for audio recognition, the audio data stream and annotation data corresponding to the audio data stream should serve as the training data, so that the neural network is trained based on coordination of the annotation data and the audio data stream.

In an embodiment, before step 330, the method further includes a following step performed on the obtained audio data stream.

The audio data stream is framed to obtain the pieces of audio data that correspond to the multiple time frames. Respective audio annotations of the pieces of audio data that correspond to the time frames are to be predicted to implement the audio recognition.

Generally, the audio data stream is of an arbitrary length and is annotated. For example, the audio data stream may be a short speech that is inputted, or may be an ongoing lecture. Therefore, the audio data stream may be framed for audio recognition based on a specified length of each frame and a specified shift between adjacent frames, so as to obtain the pieces of audio data corresponding to each time frame. A preset label in the annotation data of the audio data stream corresponds to a single time frame.

The audio recognition implemented by the neural network is a type of temporal sequence classification. The pieces of audio data obtained through the framing constitute data of a time sequence in the temporal sequence classification. Subsequent feature extraction is performed on the audio data based on the time sequence, so as to obtain a feature for the piece of audio data in each time frame.

The audio recognition is a process of predicting an audio annotation. A category of the audio data stream in which the pieces of audio data are located is predicted, and the audio data stream is annotated with a corresponding label, also known as a tag. Thereby, a result of the audio annotation is obtained, and a corresponding speaker or a category of audio content is determined based on the result of the audio annotation. The training of the neural network corresponds to such process. Therefore, it is necessary to train the neural network based on the annotated audio data stream.

In step 330, feature extraction is performed on the piece of audio data of each time frame in the audio data stream, through each layer in a neural network, to output a deep feature corresponding to each time frame.

The feature extraction on the piece of audio data in each time frame of the audio data stream is performed in the neural network. The deep feature corresponding to the time frame is obtained through the feature extraction in each layer of the neural network.

The neural network for feature extraction of audio data may apply a variety of model types and network topologies. On requirement, a structure of the network may be extended or even replaced by various effective network topologies. In an embodiment, the neural network may output the deep features for the pieces of the audio data in different time frames, through a multi-layer structure including a convolutional network layer and a Max pool layer, a multi-layer structure based on long short-term memory (LSTM), and a fully connected layer.

The deep feature outputted based on the corresponding time frame is a numerical description of the piece of audio data. Therefore, annotation the audio data stream would represent the pieces of audio data.

In an embodiment, the step 330 includes a following step. The feature extraction is performed on the piece of audio data of each time frame in the audio data stream, sequentially through each layer in a neural network, to output a deep feature corresponding to each time frame. The feature extraction does not terminate until implemented in a final layer of the neural network.

In such process, the deep feature of the piece of audio data of each time frame in the audio data stream is extracted through each layer in the neural network. Thereby, the frame serves as a unit for obtaining the deep features.

In the invention, before step 350, the method further includes following steps S410 and S430, which are performed on the deep feature corresponding to each time frame obtained in the step 330, as shown in Figure 4.

In step 410, the deep features of a preset quantity of time frames prior to a time frame and the deep features of the preset quantity of time frames subsequent to the time frame are obtained for the deep feature corresponding to the time frame.

In the foregoing embodiments, the deep feature is extracted from a piece of audio data of a single time frame. In this embodiment, for the single time frame, the deep features are spliced based on a specified length, and the spliced deep features serve as a new deep feature outputted for the single time frame.

On such basis, for the deep feature corresponding to each time frame, the deep features of the preset quantity of time frames prior to such time frame and the deep features of the preset quantity of time frames subsequent to such time frame are obtained. For example, the preset quantity may be 5, and in such case the deep features of the pieces of audio data are obtained from five frames prior to such time frame and five frames subsequent to such time frame.

In step 430, the deep feature of the time frame is spliced with the deep features of the preset quantity of time frames prior to the time frame and the deep features of the preset quantity of time frames subsequent to the time frame, to update the outputted deep feature corresponding to the time frame.

After the deep features of the specified quantities of time frames are obtained for the time frame in the step 410, the deep features are spliced based on a time sequence of the time frames corresponding to the obtained deep features. Thereby, the updated deep feature of the current time frame is obtained for the neural network to output.

The framing is performed on the audio data stream to obtain the pieces of audio data corresponding to multiple time frames. Each piece of audio data describes a part of content of the audio data stream. Classification and recognition on the audio data stream is only accurate when the feature extraction is performed on all pieces of audio data.

According to the foregoing embodiment, an audio data stream which the training of the neural network requests is framed to obtain pieces of audio data corresponding to multiple time frames, based on a specified length of the frame and according to a hardware deployment of an audio recognition terminal. Thereby, the audio data stream is adapted to arbitrary conditions of audio recognition and machine deployment, and reliability and versatility of the neural network is improved.

The deep-feature splicing based on the current time frame and the present quantities of time frames is performed on the piece of audio data corresponding to each of the multiple time frames. Therefore, the obtained deep feature is capable to reflect context information, and accuracy of the neural network is improved.

In the deep-feature splicing, the current time frame refers to a time frame that is currently processed. The deep-feature splicing is performed on each time frame, and the deep feature corresponding to each time frame is spliced with the deep features before and after such time frame. Therefore, the updated deep feature outputted for such time frame is obtained.

In step 350, an inter-class confusion index and an intra-class distance penalty that are with respect to preset labels in annotation data are fused into a preset loss function, for the audio data stream and based on the deep features.

After being extracted from the piece of audio data of the time frame, the deep feature serves as a representation of the audio data, and is applied to the training of the neural network in which the audio data participates.

The annotation data corresponds to the audio data stream. The annotation data is inputted for the process of training of the neural network, and is configured to provide all candidate labels for predicting a label of the audio data stream. Accordingly, the step 350 is configured to calculate the inter-class confusion index for the audio data stream with respect to a category corresponding to each label, so as to determine a loss. Thereby, the training of the neural network iterates once.

The deep features serves as an input of the preset loss function, so as to implement the fusion calculation of the inter-class confusion index and the intra-class distance penalty of the audio data stream with respect to the preset labels. That is, the preset loss function is a fusion-loss function. The preset loss function is configured to provide a loss for the training of the neural network.

The annotation data includes multiple preset labels. For each preset label, an inter-class confusion index and an intra-class distance penalty with respect to the preset label are fused into the preset loss function, for the audio data stream and based on the deep features. Thereby, the loss is obtained for all preset labels. The loss determines whether the training of the neural network converges and terminates at a current iteration.

The loss calculated based on the preset loss function is minimized to control the training of the neural network, so as to ensure that the iterative training of the neural network can converge to finish, thereby updating the obtained parameters to the neural network.

The neural network obtained through training corresponds to the minimum loss. Since the minimum loss is obtained through fusing the inter-class confusion index and the intra-class distance penalty value, the inter-class confusion index and the intra-class distance penalty are both minimized.

Each preset label corresponds to a category, and the preset label serves as a tag of the corresponding category. The inter-class confusion index of the audio data stream with respect to a preset label is configured to represent a possibility that the audio data stream belongs to a category corresponding to the preset label. The inter-class confusion index pertains to enhancing discrimination among different categories, that is, a smaller inter-class confusion index indicates a stronger discrimination among different categories. The intra-class distance penalty of the audio data stream with respect to the preset label pertains to enhancing a recognition capability through a penalty on distances within a same category. Thereby, a requirement on the capability of intra-class recognition may be met through compact intra-class distribution. That is, a smaller intra-class distance penalty indicates more compact intra-class distribution, and thus a better capability of intra-class recognition.

In an embodiment, the obtained inter-class confusion index and the obtained intra-class distance penalty with respect to the preset label are oriented to the piece of audio data of the time frame. An inter-class confusion index and an intra-class distance penalty, of the piece of audio data of each time frame with respect to the preset labels, participates the fusion based on the deep feature thereof.

In another embodiment, the obtained inter-class confusion index and the obtained intra-class distance penalty with respect to the preset label are oriented to the entire audio data stream. An inter-class confusion index and an intra-class distance penalty, of the audio data stream with respect to the each preset label in the annotation data, participates the fusion for the entire audio data stream.

In this embodiment, the entire audio data stream is annotated to obtain a label sequence. A loss obtained accordingly is a probability that the audio data stream is annotated with a candidate label sequence. Amplitude of the probability is determined based on an inter-class confusion index and an intra-class distance penalty of the audio data stream with respect to such label sequence.

Hence, the annotation of the single piece of audio data is optimized as the prediction on all candidate label sequences of the audio data stream. Thereby, the frame-level annotation in the training of the neural network is not necessary. It is not necessary to provide a corresponding label for the piece of audio data of each time frame in the training, and it is not necessary to ensure that a length of the inputted stream is consistent with that of the label in the training. It is normal that the piece of audio data of one or more time frames have no corresponding labels in audio, and frequently pieces of audio data of multiple time frames cannot be labeled before the current frame. Therefore, annotation that is oriented to the entire audio data stream allows that audio recognition is implemented without frame-level annotation in the training. A mechanism of sequence modeling can be supported and applied, and discriminative feature expression can be learned during training sequence discrimination.

As described above, the feature extraction is performed through each layer in the neural network, so as to obtain the deep feature of the piece of audio data of the time frame. The neural network further includes a softmax layer for outputting a result. It is understood that the outputted result is a probability distribution of the audio data stream with respect to all preset labels, based on which the aforementioned loss is obtained. Thereby, the neural network is optimized by minimizing the loss.

Therefore, implementation of step 350 is performed via the softmax layer in the neural network, in order to further obtain the loss of the audio data stream with respect to a series of preset labels in the annotation data.

The softmax layer in the neural network fuses the inter-class confusion index and the intra-class distance penalty of the audio data stream with respect to the preset labels, which is implemented through the preset fusion-loss function.

The intra-class distance penalty may be calculated through Euclidean distances, or other types of distances, such as angular distances. Correspondingly, the intra-class distance penalty may be calculated through a center-loss function, but is not limited thereto. Alternatively, the intra-class distance penalty may be calculated through a contrastive loss function that uses angular distance, a triplet loss function, a sphere-face loss function, a CosFace loss function, or the like, which are not enumerated herein.

In step 370, the loss function obtained after the fusing is evaluated, with respect to a series of the preset labels in the annotation data, to update a parameter of the neutral network.

In the step S370, the loss of the audio data stream with respect to the series of preset labels in the annotation data is obtained, and then the training of the neural network is controlled based on the loss.

The series of preset labels are all preset labels corresponding to the loss that is outputted by the softmax layer for the audio data stream. In an embodiment, the series of preset labels corresponding to the loss obtained through fusion for the audio data stream include the preset labels to which the pieces of audio data corresponding to all time frames are mapped through the softmax. In another embodiment, the series of preset labels corresponding to the loss obtained through fusion for the audio data stream include the preset labels to which the audio data stream is mapped through the softmax layer.

According to this embodiment, an error rate of audio recognition under unobserved acoustic conditions is significantly reduced, and a generalization capability of audio recognition against noise variability is effectively improved. Therefore, quite low error rates can be achieved under clean-speech conditions and under acoustic conditions that are observed and unobserved in the training.

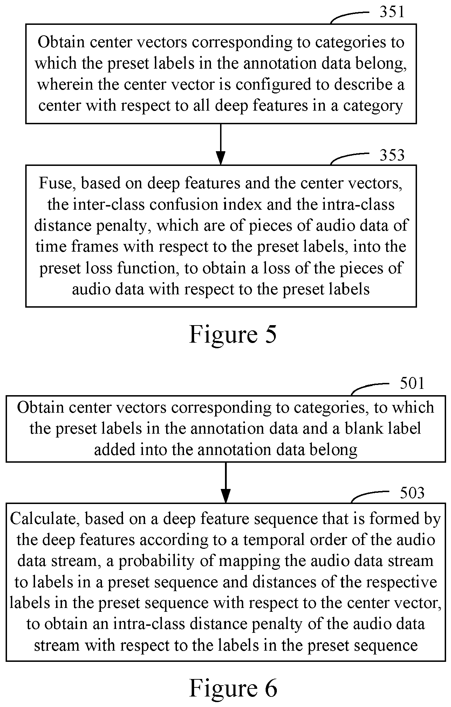

Figure 5 is a flowchart for describing step 350 illustrated in an embodiment corresponding to Figure 3. In an embodiment, the step 350 includes following steps S351 and S353, as shown in Figure 5

In step 351, center vectors corresponding to categories to which the preset labels in the annotation data belong are obtained. The center vector is configured to describe a center with respect to all deep features in a category.

In step 353, the inter-class confusion index and the intra-class distance penalty, which are of the pieces of audio data of the time frames with respect to the preset labels, are fused into the preset loss function based on the deep features and the center vectors, to obtain a loss of the pieces of audio data with respect to the preset labels.

In this embodiment, the fusion calculation is oriented to the piece of the audio data. The loss of the pieces of audio data of all time frames with respect to the preset labels is obtained through the preset loss function.

As described above, the annotation data includes multiple preset labels. Therefore, when calculating the intra-class distance penalty based on the Euclidean distances, the intra-class distances of the deep features are calculated based on the center vectors of the categories to which the preset label belong, and then the intra-class distance penalty is obtained by penalizing the intra-class distances. A center vector is configured to describing a center of the category to which a preset label belongs. When the softmax layer of the neural network performs the fusion calculation, the intra-class distance penalty for the pieces of audio data of all time frames with respect to all preset labels is calculated based on the center vectors of all preset labels in the annotation data.

Correspondingly, the inter-class confusion index of the pieces of audio data of all time frames with respect to the all preset labels is further predicted.

The fusion calculation is performed on the piece of audio data of the time frame. In the fusion calculation performed through the preset loss function, both an inter-class confusion index and an intra-class distance penalty of the piece of audio data of each time frame with respect to a same preset label are calculated and then fused, in order to obtain a loss of such piece of audio data with respect to such preset label. The same process is applied to calculate the loss of the piece of audio data of each time frame with respect to all preset labels.

According to this embodiment, annotation of the pieces of audio data can be robust to new acoustic conditions, and the audio recognition can be stably and reliably implemented even in case of a new recording environment, a new speaker, a new accent, or new background noise.

In another embodiment, the step 353 includes a following step. A center loss with respect to the preset labels are calculated based on the deep features and the center vectors, to obtain the intra-class distance penalty of the pieces of audio data of the time frames with respect to the preset labels.

As described above, the center vector corresponding to the preset label serves as a center of the category. The deep feature extracted from the piece of audio data of each time frame is used to calculate, with respect to the center vector, intra-class compactness and a discrimination capability of such deep feature in a corresponding category. The calculation is implemented by penalizing the intra-class distance between the deep feature and the center vector.

Therefore, in an embodiment, a center loss of the pieces of audio data with respect to the preset labels may be calculated through a center loss function as follows

$$L_{cl} = \sum_t \| u_t - c_{k_t} \|_2^2$$

$L_{cl}$ represents an intra-class distance penalty. $u_t$ represents the deep feature of the piece of audio data of a time frame $t$, that is, an output of a penultimate layer in the neural network for the time frame $t$. $c_{kt}$ is a center vector of the deep features in the $k_t$-th category.

Regarding the calculation of the center loss, an objective is that a sum of squares of the distances between the deep features of the pieces of audio data and the centers is as small as possible, that is, the intra-class distances are as small as possible.

In another embodiment, the step 353 further includes a following step. The inter-class confusion index of the pieces of audio data of the time frames with respect to the preset labels is calculated based on the deep features through a cross-entropy loss function.

The cross-entropy loss function is configured to ensure the inter-class discrimination of the deep features.

In an embodiment, the cross-entropy loss function is as follows.

$$L_{ce} = -\sum_t \log y_t^{k_t}$$

$L_{ce}$ represents an inter-class confusion index. $y_t^{k_t}$ represents an output from the corresponding $k_t$-th node of an output layer, which provides the softmax operation, the neural network. There are K output nodes in the neural network, which represent K categories that are outputted.

Further, $y_t^{k_t}$ is obtained through following equations.

$$y_t^{k_t} = \frac{e^{a_t^{k_t}}}{\sum_{j=1}^{K} e^{a_t^j}}$$

$$a_t = W u_t + B$$

$a_t$ represents an output from the final layer of the neural network, that is, a layer previous to the softmax layer,

$$a_t^j$$

for a corresponding time frame $t$. represents such output from the $j$-th node. W and B corresponds to a weight matrix and an offset vector of the final layer, respectively.

In another embodiment, the step 353 further includes a following step. Weighting is performed on the intra-class distance penalty and the inter-class confusion index of the pieces of audio data with respect to the preset labels, in the preset loss function based on a preset weight, to obtain the loss of the pieces of audio data with respect to the preset labels.

The fusion calculation is adding the two weighted factors in the preset loss function according to the preset weight. Thereby, a loss of the pieces of audio data with respect to the preset labels is obtained.

In an embodiment, the fusion-loss function serves as the preset loss function, in which the center loss function and the cross-entropy loss function are fused as follows.

$$L_{fmf} = L_{ce} + \lambda L_{cl}$$

$L_{fmf}$ represents a loss of pieces of audio data with respect to the preset labels. $\lambda$ represents the preset weight.

In an embodiment, the piece of audio data of each time frame in the audio data stream is annotated with a preset label in the annotation data.

As described above, the audio data stream includes different pieces of audio data corresponding to multiple time frames, respectively. The piece of audio data of each time frame is annotated, and the corresponding preset label is from the annotation data.

That is, all preset labels in the annotation data correspond to the pieces of audio data of the time frames in the audio data stream. Thereby, alignment of the annotation data and the audio data stream is ensured in the training of the neural network.

Figure 6 is a flowchart for describing step 350 illustrated in an embodiment corresponding to Figure 3 according to another embodiment. In another embodiment, a blank label is added into the annotation data. The step 350 includes following steps S501 and S503, as shown in Figure 6.

In step 501, center vectors corresponding to categories, to which the preset labels in the annotation data and a blank label added into the annotation data belong, are obtained.

In step 503, a probability of mapping the audio data stream to labels in a preset sequence and distances of the respective labels in the preset sequence with respect to the center vector are calculated based on a deep feature sequence, which is formed by the deep features according to a temporal order of the audio data stream, to obtain an intra-class distance penalty of the audio data stream with respect to the labels in the preset sequence.

The labels in the preset sequence include the added blank label and the preset label(s).

The blank label is a label newly added label into the annotation data, and corresponds to a "blank category". Generally, there are one or more time frames in the audio data stream, of which the piece(s) of audio data is difficult to be annotated with a specific preset label. In such case, the blank label may be assigned to the audio data, so as to ensure the alignment between the audio data stream and the labels of the preset sequence. That is, addressed is an issue that a length of the audio data stream is inconsistent with that of the labels. The audio recognition is no longer limited by the frame-level annotation data.

For the audio data stream, the blank label presents among the preset labels with which the audio data stream is annotated. That is, the preset labels are separated by the blank label.

The labels of the preset sequence include multiple preset labels and the blank label(s) inserted among these preset labels. Additionally, blank labels are inserted at a head and a tail in the labels of the preset sequence, so as to address the problem that the pieces of audio data of the first and the last frames in the audio data stream have no meaning and thus cannot be annotated.

Therefore, in an embodiment, the audio data stream is annotated with an unaligned string of discrete labels, and a blank label is added into the string of discrete labels. The added blank label and the preset labels in the annotation correspond to the pieces of audio data of different time frames, respectively, in the audio data stream.

The unaligned string of discrete labels for the audio data stream is a sequence of preset labels. Therefore, the string of discrete labels includes multiple preset labels. A correspondence between each frame of the inputted signal stream and a preset label cannot be established. That is, it is not certain that a preset label in the string of discrete labels corresponds to which frame of the inputted signal stream.

The audio data stream and the unaligned string of discrete labels serve as training data for training the neural network. Thereby, the training of the neural network and subsequent audio recognition are no longer limited by the frame-level annotation data. That is, they are no longer limited by a failure in aligning the input signal stream with the string of discrete labels.

The intra-class distance penalty of the audio data stream with respect to the labels in the preset sequence is obtained through calculating a center loss, which is an expectation of a distance by which the deep features in the audio data stream deviate from the center vector for the labels in the preset sequence. The labels in the preset sequence are a sequence of labels to which the audio data stream may correspond, and includes the preset label(s) and the blank label(s).

The probability of mapping the audio data stream to the labels in the preset sequence is calculated with respect to each candidate label in the preset sequence, and is configured to describe a mapping relationship between the audio data stream and the labels in the preset sequence.

In an embodiment, the probability of mapping the audio data stream to the labels in the preset sequence may be calculated through conditional probability distribution as below.

$$p(s,t \mid z) = \alpha_t(s)\beta_t(s)$$

$\alpha_t(s)$ and $\beta_t(s)$ represent a forward variable and a backward variable, respectively, and may be calculated according to a maximum likelihood criterion in connectionist temporal classification (CTC). $z$ represents a sequence of labels with a length of $r$.

Since the labels in the preset sequence are substantially obtained by inserting blank label(s) into the label sequence $z$, the probability of mapping the audio data stream to the labels in the preset sequence, which is calculated for the labels in the preset sequence, is substantially calculated based on the label sequence $z$.

Correspondingly, the intra-class distance penalty of the audio data stream with respect to the labels in the preset sequence is calculated through a following conditional-expectation center loss function.

$$L_{ecl} = \sum_s \sum_t p(s,t \mid z) \| u_t - c_{z'_s} \|_2^2$$

$L_{ecl}$ represents the intra-class distance penalty of the audio data stream with respect to the labels in the preset sequence. $z'$ represents labels in the preset sequence obtained by inserting blank labels at a head and a tail of the label sequence $z$ and between each pair of adjacent preset labels in the label sequence $z$. $c_{z'_s}$ is a center vector of a category corresponding to the labels in the preset sequence. $S$ represents a training set in which an annotation pair including the audio data stream x and a label sequence $z$ is located.

The probability of mapping the audio data stream to the labels in the preset sequence and distances of the respective labels in the preset sequence with respect to the center vectors are calculated during the fusion calculating for the audio data stream. Thereby, calculation of the conditional-expectation center loss function is implemented, and the intra-class distance penalty of the audio data stream with respect to the labels in the preset sequence is obtained. Each candidate label sequence, which may be formed by the preset label(s) in the annotation data and the blank label, may serve as the labels in the preset sequence that participate in the calculation.

In another embodiment, the step 350 includes a following step. A probability distribution of the audio data stream with respect to the labels in the preset sequence is calculated based on the deep features, and a log-likelihood cost of the audio data stream is calculated based on the probability distribution as an inter-class confusion index of the audio data stream with respect to the labels in the preset sequence.

Besides the calculation of the intra-class distance penalty of the audio data stream with respect to the labels in the preset sequence, the calculation of the inter-class confusion index of the audio data stream with respect to the labels in the preset sequence is also performed for the audio data stream. An objective of the calculation of the inter-class confusion index of the audio data stream with respect to the labels in the preset sequence is maximizing a probability that the labels in the preset sequence is a correct label for the audio data stream. All probabilities of correct annotation would be maximized, that is, the log-likelihood costs of the probability distributions of the audio data streams with respect to the labels in the preset sequences are minimized.

In an embodiment, the probability distribution of the audio data stream with respect to the labels in the preset sequence may be calculated as follows

$$p(z \mid x)$$

Then, the log-likelihood costs of the audio data streams may be calculated through the probability distributions as follows.

$$L_{ml} = - \sum_{(x,z)\in S} \ln( p(z \mid x))$$

$L_{ml}$ represents the inter-class confusion index of the audio data stream with respect to the labels in the preset sequence, that is, the log-likelihood costs of the audio data streams.

In another embodiment, the step 350 further includes a following step. Weighting is performed on the inter-class confusion index and the intra-class distance penalty of the audio data stream with respect to the labels in the preset sequence, in the preset loss function based on a preset weight, to obtain a loss of the audio data stream with respect to the labels in the preset sequence.

The foregoing inter-class confusion index and the foregoing intra-class distance penalty of the audio data stream with respect to the labels in the preset sequence are fused, that is, the two factors are weighed and added based on the preset weighting factor. Thereby, the loss of the audio data stream with respect to the labels in the preset sequence is obtained.

In an embodiment, it is determined based on a minimum loss whether that the training of the neural network converges and finishes. Therefore, correspondingly, the weighting based on the preset weighting factor is performed on each audio data stream with respect to corresponding labels in the preset sequence, and a parameter corresponding to the minimum loss may be updated in the neural network.

In an embodiment, the losses of the audio data streams with respect to the labels in the preset sequences are calculated through a following temporal multi-loss fusion function.

$$L_{tmf} = L_{ml} + \lambda L_{ecl}$$

$L_{tmf}$ is the losses of the audio data streams with respect to the labels in the preset sequences. $\lambda$ represents the preset weight.

The temporal multi-loss fusion function can ensure the inter-class discrimination of the deep features. Further, the conditional-expectation center loss function improves compactness of the intra-class distribution of the deep features. Namely, recognition performances are improved.

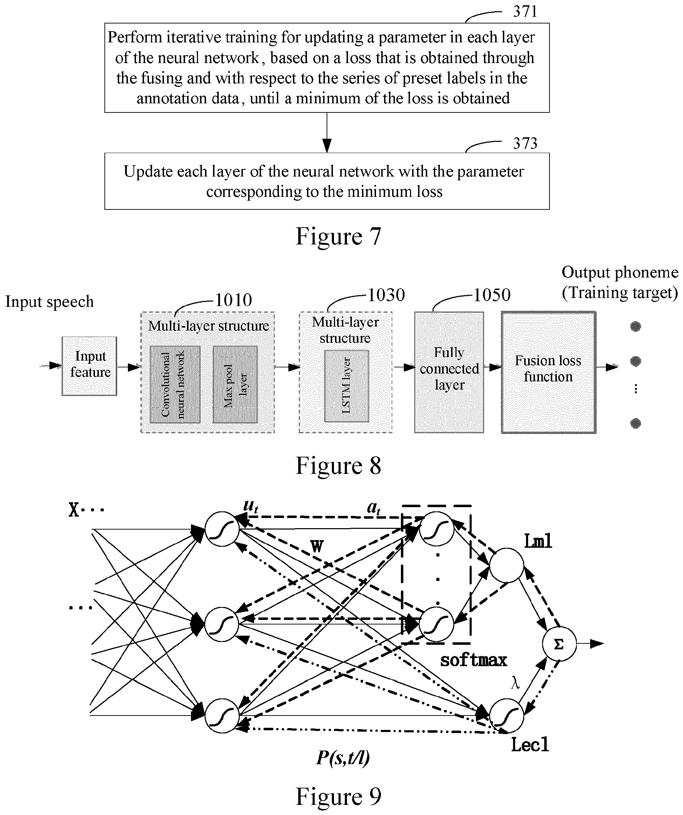

Figure 7 is a flowchart for describing step 370 illustrated in an embodiment corresponding to Figure 3. In an embodiment, the step 370 includes the steps S371 and S373, as shown in Figure 7.

In step 371, iterative training is performed for updating a parameter in each layer of the neural network, based on a loss with respect to the series of preset labels in the annotation data, until a minimum of the loss is obtained. The loss is obtained through the fusing.

In step 373, each layer of the neural network is updated with the parameter corresponding to the minimum loss.

The robust neural network for audio recognition is obtained by training through the continuous audio data stream including noise. Generally, the audio data stream and the fusion-loss function enable the trained neural network to cover a variety of different acoustic conditions, and the trained neural network can adapt to various acoustic conditions and have better reliability and stability.

During the training through each layer of the neural network, a weight of each layer of the network is optimized based on the minimum loss, so as to obtain the neural network that is robust to unobserved acoustic conditions. That is, in an embodiment, the minimum loss serves as a target of the training of the neural network. Thereby, a label of audio data stream can be predicted via the neural network.

In the training of the neural network, the audio data stream is transmitted forward until an error signal is outputted and generated, and information of the error information propagates backward to update the parameter, such as a weight matrix of each layer in the network, and a parameter of the softmax layer. Thereby, the training of the multilayer neural network is implemented, and then the multilayer neural network is applied to audio classification tasks.

For example, the temporal multi-loss function applied to the softmax layer is differentiable. Therefore, a backward propagation algorithm of a neural network standard can be used for the training.

According to this embodiment, the trained neural network is continuously optimized, and the accuracy of audio recognition through the neural network is continuously enhanced.

According to the forgoing embodiments, various applications such as automatic speech recognition can be implemented under various acoustic conditions, for example, clean speech conditions, and acoustic conditions that are observed and unobserved in the training. A quite low word-error rate can be achieved. In addition, according to the foregoing embodiment, the reduced word error rate is most significant under the unobserved acoustic conditions among all acoustic conditions. It is strongly indicated that according to the foregoing embodiment, robustness can be effectively improved, both the inter-class discrimination and compactness of the intra-class distribution can be improved for the deep features, and a generalization capability against noise variability can also be effectively improved.

Implementation of the training according to the foregoing embodiments is applicable to neural networks of various network structures. That is, a model type and a network structure of the neural network are not limited. Various new network structures that are effective may serve as substitutions, and the softmax layer is constructed for the selected neural network, except which no complexity is added. It is not necessary to configure an extra hyper-parameter or tune the network structure. Consistency performances are improved.

The foregoing embodiment may be applied to multiple projects and product applications, such as smart speakers, smart TVs, online speech recognition systems, smart speech assistants, simultaneous interpretation, and virtual people. Accuracy is significantly improved in a real acoustic environment that is complex and highly variable, and the performances are greatly improved.

Implementation of an automatic speech recognition system is taken as an example for illustration with reference to the forgoing embodiments. As an application of audio recognition, the automatic speech recognition system is trained based on inputted audio data streams, so as to obtain a neural network. In one aspect, the conventional automatic speech recognition is not applicable to all possible acoustic conditions and the varying acoustic conditions, because the applied neural network cannot cover all acoustic conditions in training. In another aspect, when training the neural network, each sample frame needs to be provided with a corresponding category label, which cannot be satisfied in practical training of the neural network. The available training data are continuous audio data streams that include noise, and sequences of unaligned discrete labels. It is uncertain that a particular label corresponds to which frames of the input signal stream.

Therefore, the foregoing method is applied to the automatic speech recognition. After the inter-class confusion index and the intra-class distance penalty of the audio data stream with respect to the preset labels are fused through each layer of the neural network based on the deep features. Thereby, the loss function can be evaluated for the audio data stream with respect to a series of preset labels the annotation data, to implement the training of the neural network.

Figure 8 is a schematic diagram of network architecture of a neural network in an automatic speech recognition system according to an embodiment. In an embodiment of the present disclosure, the network architecture of the neural network for automatic speech recognition system includes at least a multi-layer structure 1010 including a convolutional network layer and a Max pool layer, a multi-layer structure 1030 of LSTM, a fully connected layer 1050, and a fusion-loss function calculation module, as shown in Figure 8. Correspondingly, an input feature is obtained from the audio data stream through a feature extracting module, then passes the multi-layer structure 1010 including the convolutional network layer and the Max pool layer, then passes the multi-layer structure 1030 of LSTM, then passes the fully connected layer 1050, and then is outputted to the fusion-loss function calculation module. The training of the neural network training is implemented based on a fusion-loss function implemented by the fusion-loss function calculation module. The annotation data may be phoneme representations for the audio data stream.

Output phonemes contribute to a target for training the neural, and are obtained in supervising the training.

For example, it is assumed that the neural network in Figure 8 includes $K$ output nodes that represent $K$ output categories. The $K$ categories are, for example, context-related phonemes, context-related sub-phonemes, and hidden-Markov state labels. It is further assumed that the existing training data and the corresponding frame-level labels are $(x_t, k_t): t = 1,...,T$, which indicates that $x_t$ is input data belonging to a $k_t$-th category. In such case, the loss of the audio data stream with respect to the series of preset labels in the annotation data may be calculated through the fusion-loss function, that is, $L_{fmf} = L_{ce} + \lambda L_{cl}$, according to the foregoing embodiment, so as to implement the training of the neural network.

Such fusion-loss function is capable to ensure both the inter-class discrimination and the compactness of intra-class distribution of the deep features, when implementing the automatic speech recognition system. Thereby, robustness is improved when testing the applied neural network against acoustic scenarios unobserved in the training.

Further, the fusion-loss function calculation module in the neural network as shown in Figure 8 may apply the temporal multi-loss fusion function, that is, $L_{tmf} = L_{ml} + \lambda L_{ecl}$. The fusion-loss function calculation module is implemented in such a manner to ensure the inter-class discrimination and the intra-class discrimination.

In such case, it is to be understood that the loss of the audio data stream with respect to the series of labels in the preset sequence, which is calculated through the temporal multi-loss fusion function, is obtained through calculating the probability distribution on all possible label sequences. With the probability distribution being set, the temporal multi-loss function directly maximizes a probability of the correct labels while penalizing distances between the deep features and the corresponding center. Thereby, a limitation due to the frame-level annotation data is removed.

When training the neural network for the automatic speech recognition system, the input feature of the training data applies Fbank features of 40 dimensions, which are extracted with a length of each frame being 25ms and a shift between adjacent frames being 10ms. Then, a first difference and a second difference of such features are calculated, so as to construct a vector of 120 dimensions. After normalization, vectors of the current frame, five frames previous to the current frames, and five frames subsequent to the current frames are spliced to form an input feature vector of 120 * (5 + 5 + 1) = 1320 dimensions. Such input feature vector is the aforementioned deep feature corresponding to the current time frame.

A network structure and hyper-parameters of the neural network are configured as shown in Table 1. As describe above, the network structure includes two two-dimensional convolutional layers, which have 64 output channels and 80 output channels, respectively. A kernel size of each convolutional layer is (3, 3), and a stride of each convolutional layer is (1, 1). Each convolutional layer is connected to a Maxpool layer with a kernel size of (2, 2) and a stride of (2, 2). Five LSTM layers are subsequently connected, and each has 1024 hidden nodes and 512 output nodes. A fully connected layer is subsequently connected, and output nodes thereof correspond to $K$ output categories. For example, 12K context-related phonemes may be used in a detailed implementation.

Table 1. A configuration example of the network structure in the neural network used in the present disclosure

| Network layer | Hyperparameter |
| --- | --- |
| Conv2d_1 | Kernel_size = (3, 3), stride = (1, 1), out_channels = 64 |
| Max_pool_1 | Kernel_size = (2, 2), stride = (2, 2) |
| Conv2d_2 | Kernel_size = (3, 3), stride = (1, 1), out_channels = 80 |
| Max_pool_2 | Kernel_size = (2, 2), stride = (2, 2) |
| LSTM (5 layers) | Hidden_size = 1024, with peephole, output size = 512 |
| Fully connected layer | Output_size = 12K |

The network architecture configured based on the foregoing embodiment may adopt the fusion-loss function, that is, $L_{fmf} = L_{ce} + \lambda L_{cl}$, or the temporal multi-loss fusion function for training. In the training based on the fusion-loss function $L_{fmf} = L_{ce} + \lambda L_{cl}$, the preset weight $\lambda$ is 1e-3 under noise-free and clean speech conditions, and is 1e-4 under noise-included speech conditions. Adaptive moment estimation is applied as an optimization algorithm for the training. A initial learning rate is set as 1e-4 at a beginning of the training. The learning rate is halved in a case that an average verification likelihood (calculated every 5*K batches in the training) does not decrease in three consecutive calculations. The training is terminated in a case that the average verification likelihood does not decrease in eight consecutive calculations.

The temporal multi-loss fusion function is also differentiable when applied in the training of the neural network. Therefore, a standard backward propagation algorithm may be adopted in the training. Correspondingly, on a basis of the foregoing methods, Figure 9 is a schematic diagram of forward propagation and backward propagation of error signal streams when a fusion-loss function supervises training of a neural network according to an embodiment of the present disclosure.

For example, a learning algorithm for the temporal multi-loss fusion function may include an input part and an output part.

In the input part, a training label pair $(x,z) \in S$ serves as an input. An initialization parameter $\theta$ of the convolutional layer and the LSTM layer is configured. An initialization weight parameter $W$ and an initialization center vector $\{c_j|j=1,2,...,K\}$ of the fully connected layer are configured. A weight $\lambda$, a batch momentum $\mu$, and a learning rate $\gamma$ are configured.

In the output part, the parameters $\theta$ and $W$ are adjusted for the learning algorithm of the temporal multi-loss fusion function, and a parameters of the center vector is updated after inserting the blank label(s).

In a specific embodiment, a backward-propagation error signal generated by the CTC loss function

$$L_{ml} = - \sum_{(x,z) \in S} \ln( p(z \mid x))$$

is calculated through the temporal multi-loss function. As shown in Figure 9, the backward-propagation error signal of the log-likelihood cost $L_{ml}$ of the audio data stream, that is,

$$\delta_{ecl} = \frac{\partial L_{ecl}}{\partial u_t} = \sum_{s} \alpha_t(s)\beta_t(s)(u_t - c_{z'_s})$$

, can be obtained through the softmax layer.

A backward-propagation error signal generated by the conditional expectation center loss function is then calculated.

$$\delta_{ecl} = \frac{\partial L_{ecl}}{\partial u_t} = \sum_s \alpha_t(s)\beta_t(s)(u_t - c_{z'_s})$$

A fused backward propagation error signal is calculated through the penultimate layer as shown in Figure 9.

$$\delta = W^T \delta_{ml} + \lambda \delta_{ecl}.$$

Based on the chain rule, adjustments $\Delta W$ and $\Delta \theta$ on the parameters $W$ and $\theta$ are obtained based on the foregoing backward-propagation error signals $\delta_{ml}$ and $\delta_{ecl}$.

The center vector is updated as follows.

$$c_{z'_s} = c_{z'_s} - \mu \sum_t \alpha_t(s)\beta_t(s)(c_{z'_s} - u_t).$$

A similar process repeats until convergence.

The neural network trained through the foregoing loss function is applied to the automatic speech recognition system, so as to obtain robustness to unobserved acoustic conditions.

It is understood that according to the methods described in embodiments of the present disclosure, other training methods may further be applied obtain the robustness of the neural network to unobserved acoustic conditions..

Hereinafter apparatus embodiments of the present disclosure are described, and are configured to perform the foregoing method embodiment. Details not disclosed in the apparatus embodiments of the present disclosure may refer to the method embodiments of the present disclosure.

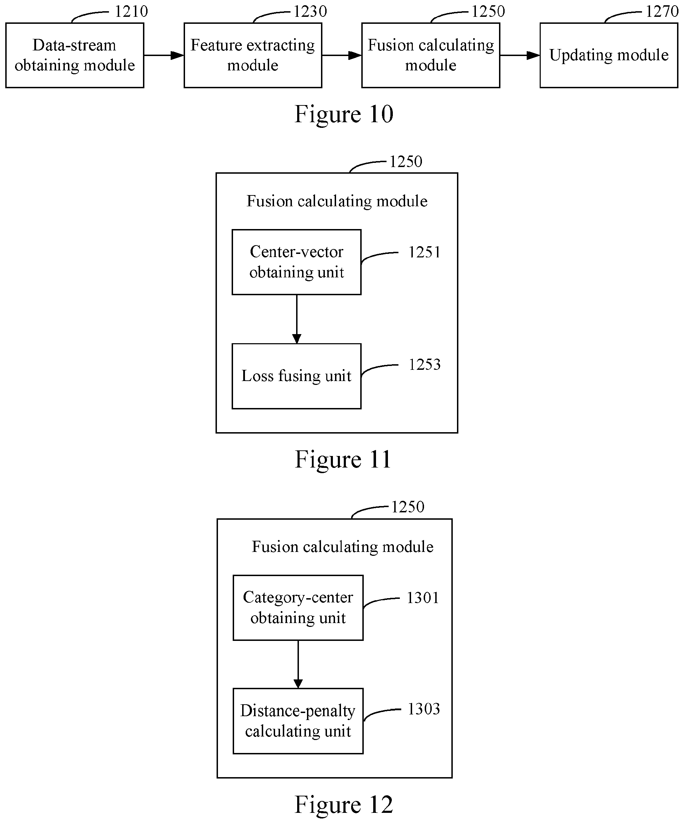

Figure 10 is a block diagram of a system for audio recognition according to an embodiment. In an embodiment, the system for audio recognition includes, but is not limited to, a data-stream obtaining module 1210, a feature extracting module 1230, a fusion calculating module 1250, and an updating module 1270, as shown in Figure 10.

The data-stream obtaining module 1210 is configured to obtain an audio data stream for training a neural network for audio recognition. The audio data stream includes pieces of audio data that correspond to multiple time frames, respectively.

The feature extracting module 1230 is configured to perform feature extraction on the piece of audio data of each time frame in the audio data stream, through each layer in a neural network, to output a deep feature corresponding to each time frame.

The fusion calculating module 1250 is configured to fuse, for the audio data stream and based on the deep features, an inter-class confusion index and an intra-class distance penalty that are with respect to preset labels in annotation data, into a preset loss function.

The updating module 1270 is configured to evaluate the loss function obtained after the fusing, with respect to a series of the preset labels in the annotation data, to update a parameter of the neutral network.

Figure 11 is a block diagram of a fusion calculating module illustrated in embodiment corresponding to Figure 10. In an embodiment, the fusion calculating module 1250 includes a center-vector obtaining unit 1251 and a loss fusing unit 1253, as shown in Figure 11.

The center-vector obtaining unit 1251 is configured to obtain center vectors corresponding to categories to which the preset labels in the annotation data belong. The center vector is configured to describe a center with respect to all deep features in a category

The loss fusing unit 1253 is configured to fuse, based on the deep features and the center vectors, the inter-class confusion index and the intra-class distance penalty that are of the pieces of audio data of the time frames with respect to the preset labels, into the preset loss function, to obtain a loss of the pieces of audio data with respect to the preset labels.

In another embodiment, the loss fusing unit 1253 is further configured to calculate, based on the deep features and the center vectors, a center loss with respect to the preset labels to obtain the intra-class distance penalty of the pieces of audio data of the time frames with respect to the preset labels.

In another embodiment, the loss fusing unit 1253 is further configured to calculate, based on the deep features through a cross-entropy loss function, the inter-class confusion index of the pieces of audio data of the time frames with respect to the preset labels.

In another embodiment, the loss fusing unit 1253 is further configured to perform weighting, in the preset loss function based on a preset weight, on the intra-class distance penalty and the inter-class confusion index of the pieces of audio data with respect to the preset labels, to obtain the loss of the pieces of audio data with respect to the preset labels.

Figure 12 is a block diagram of a fusion calculating module illustrated in an embodiment corresponding to Figure 10 according to another embodiment. In an embodiment, a blank label is added into the annotation data. The fusion calculating module 1250 includes a category-center obtaining unit 1301 and an distance-penalty calculating unit 1303, as shown in Figure 12.

The category-center obtaining unit 1301 is configured to obtain center vectors corresponding to categories, to which the preset labels in the annotation data and a blank label added into the annotation data belong.

The distance-penalty calculating unit 1303 is configured to calculate, based on a deep feature sequence that is formed by the deep features according to a temporal order of the audio data stream, a probability of mapping the audio data stream to labels in a preset sequence and distances of the respective labels in the preset sequence with respect to the center vector, to obtain an intra-class distance penalty of the audio data stream with respect to the labels in the preset sequence.

The labels in the preset sequence include the added blank label and the preset label(s).

In another embodiment, the fusion calculating module 1250 further includes a probability-distribution calculation unit. The probability-distribution calculation unit is configured to: calculate, based on the deep features, a probability distribution of the audio data stream with respect to the labels in the preset sequence; and calculate, based on the probability distribution, a log-likelihood cost of the audio data stream as an inter-class confusion index of the audio data stream with respect to the labels in the preset sequence.

In another embodiment, the fusion calculating module 1250 further includes a weighting calculation unit. The weighting calculation unit is configured to perform weighting, in the preset loss function based on a preset weight, the inter-class confusion index and the intra-class distance penalty of the audio data stream with respect to the labels in the preset sequence, to obtain a loss of the audio data stream with respect to the labels in the preset sequence.

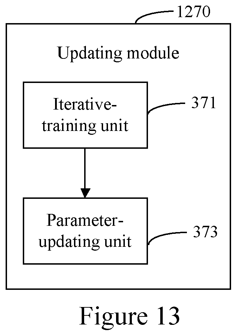

Figure 13 is a block diagram of an updating module illustrated in an embodiment corresponding to Figure 10. In an embodiment, the updating module 1270 includes an iterative-training unit 371 and a parameter-updating unit 373, as shown in Figure 13.

The iterative-training unit 371 is configured to perform, based on a loss that is obtained through the fusing and with respect to the series of preset labels in the annotation data, iterative training for updating a parameter in each layer of the neural network, until a minimum of the loss is obtained.

The parameter-updating unit 373 is configured to update each layer of the neural network with the parameter corresponding to the minimum loss.

A device is further provided in an optional embodiment of the present disclosure. The device may be applied to an implementation environment as shown in Figure 1, and perform all or some of the steps in the method as shown in any one of Figure 3, Figure 4, Figure 5, Figure 6, and Figure 7. The apparatus includes a processor and a memory.

The memory is configured to store instructions executable to processor.

The processor is configured to implement the aforementioned method.

Specific implementations of operations performed by the processor of the apparatus in this embodiment are described in detail in the foregoing embodiments. Details are not described again herein.

In addition, a storage medium is further provided according to an embodiment of the present disclosure. The storage medium includes a stored program. The program when executed implements any the foregoing method embodiment.

In addition, a computer program product including instructions is further provided according to an embodiment of the present disclosure. The computer program product when executed on a computer configure configures the computer to implement the foregoing method embodiment.

It should be understood that the present disclosure is not limited to the precise structures described above and shown in the drawings. Various modifications and changes may be made without departing from the scope of the present disclosure. The scope of the present disclosure is only limited by the appended claims.

**Claims**

1. A method for training a neural network for audio recognition, comprising:

   obtaining (310) an audio data stream for training a neural network for audio recognition, wherein the audio data stream comprises pieces of audio data that correspond to a plurality of time frames, respectively;

   performing (330) feature extraction on the piece of audio data of each time frame in the audio data stream, through each layer in a neural network, to output a deep feature corresponding to each time frame;
   fusing (350), for the audio data stream and based on the deep features, an inter-class confusion index and an intra-class distance penalty that are with respect to preset labels in annotation data, into a preset loss function; and

evaluating (370) the loss function obtained after the fusing, with respect to a series of the preset labels in the annotation data, to update a parameter of the neutral network; wherein evaluating (370) the loss function obtained after the fusing comprises minimizing a loss calculated based on the preset loss function;

the method being **characterized in that**:
before fusing (350) the inter-class confusion index and the intra-class distance penalty into the preset loss function, the method further comprises:
splicing the deep feature of each time frame with the deep features of the preset quantity of time frames prior to said time frame and the deep features of the preset quantity of time frames subsequent to said time frame to update the outputted deep feature corresponding to said time frame.

2.  The method according to claim 1, wherein obtaining (310) the audio data stream for training the neural network for audio recognition comprises:
    obtaining the audio data stream and the annotation data, as training data for the neural network, wherein the audio data stream is continuous and comprises noise.

3.  The method according to claim 1, wherein fusing (350), for the audio data stream and based on the deep features, the inter-class confusion index and the intra-class distance penalty with respect to the preset labels in annotation data into the preset loss function comprises:
    obtaining (351) center vectors corresponding to categories to which the preset labels in the annotation data belong, wherein the center vector is configured to describe a center with respect to all deep features in a category; and
    fusing (353), based on the deep features and the center vectors, the inter-class confusion index and the intra-class distance penalty that are of the pieces of audio data of the time frames with respect to the preset labels, into the preset loss function, to obtain a loss of the pieces of audio data with respect to the preset labels.

4.  The method according to claim 3, wherein fusing (353), based on the deep features and the center vectors, the inter-class confusion index and the intra-class distance penalty that are of the pieces of audio data of the time frames with respect to the preset labels into the preset loss function to obtain the loss of the pieces of audio data with respect to the preset labels comprises:
    calculating, based on the deep features and the center vectors, a center loss with respect to the preset labels, to obtain the intra-class distance penalty of the pieces of audio data of the time frames with respect to the preset labels.

5.  The method according to claim 4, wherein fusing (353), based on the deep features and the center vectors, the inter-class confusion index and the intra-class distance penalty that are of the pieces of audio data of the time frames with respect to the preset labels into the preset loss function to obtain the loss of the pieces of audio data with respect to the preset labels further comprises:
    calculating, based on the deep features through a cross-entropy loss function, the inter-class confusion index of the pieces of audio data of the time frames with respect to the preset labels.

6.  The method according to claim 4 or 5, wherein fusing (353), based on the deep features and the center vectors, the inter-class confusion index and the intra-class distance penalty that are of the pieces of audio data of the time frames with respect to the preset labels into the preset loss function to obtain the loss of the pieces of audio data with respect to the preset labels further comprises:
    performing weighting, in the preset loss function based on a preset weight, the intra-class distance penalty and the inter-class confusion index of the pieces of audio data with respect to the preset labels, to obtain the loss of the pieces of audio data with respect to the preset labels.

7.  The method according to claim 6, wherein the piece of audio data of each time frame in the audio data stream is annotated with one of the preset labels in the annotation data.

8.  A device, comprising:

    a processor; and
    a memory, storing computer-readable instructions;

wherein the computer-readable instructions when executed by the processor implements the method according to any one of claims 1 to 7.

9. A storage medium, comprising a stored computer program,
wherein the computer program when executed implements the method according to any one of claims 1 to 7.

10. A computer program product, comprising instructions, wherein: the computer program product when executed on a computer configures the computer to implement the method according to any one of claims 1 to 7.

**Patentansprüche**

1. Verfahren zum Trainieren eines neuronalen Netzwerks zur Audioerkennung, das Folgendes beinhaltet:

Erhalten (310) eines Audiodatenstroms zum Trainieren eines neuronalen Netzwerks zur Audioerkennung, wobei der Audiodatenstrom Audiodatenstücke umfasst, die jeweils mehreren Zeitrahmen entsprechen;
Durchführen (330) von Merkmalsextraktion an dem Audiodatenstück jedes Zeitrahmens in dem Audiodatenstrom durch jede Schicht in einem neuronalen Netzwerk, um ein tiefes Merkmal entsprechend jedem Zeitrahmen auszugeben;
Fusionieren (350), für den Audiodatenstrom und auf der Basis der tiefen Merkmale, eines Inter-Klassen-Konfusionsindex und einer Intra-Klassen-Distanzeinbuße in Bezug auf voreingestellte Etiketten in Annotationsdaten, zu einer voreingestellten Verlustfunktion; und
Auswerten (370) der nach dem Fusionieren erhaltenen Verlustfunktion in Bezug auf eine Reihe der voreingestellten Etiketten in den Annotationsdaten, um einen Parameter des neutralen Netzwerks zu aktualisieren;
wobei das Auswerten (370) der nach dem Fusionieren erhaltenen Verlustfunktion das Minimieren eines auf der Basis der voreingestellten Verlustfunktion berechneten Verlusts beinhaltet;
wobei das Verfahren **dadurch gekennzeichnet ist, dass**:
vor dem Fusionieren (350) des Inter-Klassen-Konfusionsindex und der Intra-Klassen-Distanzeinbuße zu der voreingestellten Verlustfunktion das Verfahren ferner Folgendes beinhaltet:
Spleißen des tiefen Merkmals jedes Zeitrahmens mit den tiefen Merkmalen der voreingestellten Menge von Zeitrahmen vor dem genannten Zeitrahmen und den tiefen Merkmalen der voreingestellten Menge von Zeitrahmen nach dem genannten Zeitrahmen, um das ausgegebene tiefe Merkmal entsprechend dem genannten Zeitrahmen zu aktualisieren.

2. Verfahren nach Anspruch 1, wobei das Erhalten (310) des Audiodatenstroms zum Trainieren des neuronalen Netzwerks für Audioerkennung Folgendes beinhaltet:
Erhalten des Audiodatenstroms und der Annotationsdaten als Trainingsdaten für das neuronale Netzwerk, wobei der Audiodatenstrom kontinuierlich ist und Rauschen umfasst.

3. Verfahren nach Anspruch 1, wobei das Fusionieren (350), für den Audiodatenstrom und auf der Basis der tiefen Merkmale, des Inter-Klassen-Konfusionsindex und der Intra-Klassen-Distanzeinbuße in Bezug auf die voreingestellten Etiketten in Annotationsdaten zu der voreingestellten Verlustfunktion Folgendes beinhaltet:

Erhalten (351) von Mittenvektoren entsprechend Kategorien, zu denen die voreingestellten Etiketten in den Annotationsdaten gehören, wobei der Mittenvektor zum Beschreiben einer Mitte in Bezug auf alle tiefen Merkmale in einer Kategorie konfiguriert ist; und
Fusionieren (353), auf der Basis der tiefen Merkmale und der Mittenvektoren, des Inter-Klassen-Konfusionsindex und der Intra-Klassen-Distanzeinbuße von den Audiodatenstücken der Zeitrahmen in Bezug auf die voreingestellten Etiketten zu der voreingestellten Verlustfunktion, um einen Verlust der Audiodatenstücke in Bezug auf die voreingestellten Etiketten zu erhalten.

4. Verfahren nach Anspruch 3, wobei das Fusionieren (353), auf der Basis der tiefen Merkmale und der Mittenvektoren, des Inter-Klassen-Konfusionsindex und der Intra-Klassen-Distanzeinbuße von den Audiodaten der Zeitrahmen in Bezug auf die voreingestellten Etiketten zu der voreingestellten Verlustfunktion, um den Verlust der Audiodatenstücke in Bezug auf die voreingestellten Etiketten zu erhalten, Folgendes beinhaltet:
Berechnen, auf der Basis der tiefen Merkmale und der Mittenvektoren, eines Mittenverlusts in Bezug auf die voreingestellten Etiketten, um die Intra-Klassen-Distanzeinbuße der Audiodatenstücke der Zeitrahmen in Bezug auf die voreingestellten Etiketten zu erhalten.

**5.** Verfahren nach Anspruch 4, wobei das Fusionieren (353), auf der Basis der tiefen Merkmale und der Mittenvektoren, des Inter-Klassen-Konfusionsindex und der Intra-Klassen-Distanzeinbuße von den Audiodatenstücken der Zeitrahmen in Bezug auf die voreingestellten Etiketten zu der voreingestellten Verlustfunktion, um den Verlust der Audiodatenstücke in Bezug auf die voreingestellten Etiketten zu erhalten, ferner Folgendes beinhaltet:
Berechnen, auf der Basis der tiefen Merkmale durch eine Kreuzentropie-Verlustfunktion, des Inter-Klassen-Konfusionsindex der Audiodatenstücke der Zeitrahmen in Bezug auf die voreingestellten Etiketten.

**6.** Verfahren nach Anspruch 4 oder 5, wobei das Fusionieren (353), auf der Basis der tiefen Merkmale und der Mittenvektoren, des Inter-Klassen-Konfusionsindex und der Intra-Klassen-Distanzeinbuße von den Audiodatenstücken der Zeitrahmen in Bezug auf die voreingestellten Etiketten zu der voreingestellten Verlustfunktion, um den Verlust der Audiodatenstücke in Bezug auf die voreingestellten Etiketten zu erhalten, ferner Folgendes beinhaltet:
Durchführen einer Gewichtung, in der voreingestellten Verlustfunktion auf der Basis einer voreingestellten Gewichtung, der Intra-Klassen-Distanzeinbuße und des Inter-Klassen-Konfusionsindex der Audiodatenstücke in Bezug auf die voreingestellten Etiketten, um den Verlust der Audiodatenstücke in Bezug auf die voreingestellten Etiketten zu erhalten.

**7.** Verfahren nach Anspruch 6, wobei das Audiodatenstück jedes Zeitrahmens im Audiodatenstrom mit einem der voreingestellten Etiketten in den Annotationsdaten annotiert wird.

**8.** Gerät, das Folgendes umfasst:

einen Prozessor; und
einen Speicher, der computerlesbare Befehle speichert;
wobei die computerlesbaren Befehle bei Ausführung durch den Prozessor das Verfahren nach einem der Ansprüche 1 bis 7 implementieren.

**9.** Speichermedium, das ein gespeichertes Computerprogramm umfasst,
wobei das Computerprogramm bei Ausführung das Verfahren nach einem der Ansprüche 1 bis 7 implementiert.

**10.** Computerprogrammprodukt, das Befehle umfasst, wobei: das Computerprogrammprodukt bei Ausführung durch einen Computer den Computer zum Implementieren des Verfahrens nach einem der Ansprüche 1 bis 7 konfiguriert.

**Revendications**

**1.** Procédé de formation d'un réseau neuronal pour reconnaissance audio, comprenant :

obtenir (310) un flux de données audio pour former un réseau neuronal pour reconnaissance audio, dans lequel le flux de données audio comprend des morceaux de données audio qui correspondent à une pluralité de cadres temporels, respectivement ;
effectuer (330) une extraction de caractéristique sur le morceau de données audio de chaque cadre temporel dans le flux de données audio, à travers chaque couche dans un réseau neuronal, pour sortir une caractéristique profonde correspondant à chaque cadre temporel ;
fusionner (350), pour chaque flux de données audio et sur la base des caractéristiques profondes, un indice de confusion interclasse et une pénalité de distance intra-classe qui sont relatifs à des étiquettes préréglées dans des données d'annotation, en une fonction de perte préréglée ; et
évaluer (370) la fonction de perte obtenue après la fusion, au sujet d'une série d'étiquettes préréglées dans les données d'annotation, pour actualiser un paramètre du réseau neuronal ;
dans lequel évaluer (370) la fonction de perte obtenue après la fusion comprend minimiser une perte calculée sur la base de la fonction de perte préréglée ;

le procédé étant **caractérisé en ce que** :
avant de fusionner (350) l'indice de confusion interclasse et la pénalité de distance intra-classe en la fonction de perte préréglée, le procédé comprend en outre :
épisser la caractéristique profonde de chaque cadre temporel avec les caractéristiques profondes de la quantité préréglée de cadres temporels avant ledit cadre temporel et les caractéristiques profondes de la quantité préréglée de cadres temporels subséquente audit cadre temporel pour actualiser la caractéristique profonde sortie correspondant audit cadre temporel.

**2.** Procédé selon la revendication 1, dans lequel obtenir (310) le flux de données audio pour former le réseau neuronal pour reconnaissance audio comprend :
obtenir le flux de données audio et les données d'annotation, comme des données d'apprentissage pour le réseau neuronal, dans lequel le flux de données audio est continu et comprend du bruit.

**3.** Procédé selon la revendication 1, dans lequel fusionner (350), pour le flux de données audio et sur la base des caractéristiques profondes, l'indice de confusion interclasse et la pénalité de distance intra-classe relatifs aux étiquettes préréglées dans les données d'annotation en la fonction de perte préréglée comprend :

  obtenir (351) des vecteurs de centre correspondant à des catégories auxquelles les étiquettes préréglées dans les données d'annotation appartiennent, dans lequel le vecteur de centre est configuré pour décrire un centre relatif à toutes les caractéristiques dans une catégorie ; et
  fusionner (353), sur la base des caractéristiques profondes et des vecteurs de centre, l'indice de confusion interclasse et la pénalité de distance intra-classe qui appartiennent aux morceaux de données audio des cadres temporels relatifs aux étiquettes préréglées, en la fonction de perte préréglée, pour obtenir une perte des morceaux de données audio relatifs aux étiquettes préréglées.

**4.** Procédé selon la revendication 3, dans lequel fusionner (353), sur la base des caractéristiques profondes et des vecteurs de centre, l'indice de confusion interclasse et la pénalité de distance intra-classe qui appartiennent aux morceaux de données audio des cadres temporels relatifs aux étiquettes préréglées en la fonction de perte préréglée pour obtenir la perte des morceaux de données audio relatifs aux étiquettes préréglées comprend :
calculer, sur la base des caractéristiques profondes et des vecteurs de centre, une perte de centre relative aux étiquettes préréglées, pour obtenir la pénalité de distance intra-classe des morceaux de données audio des cadres temporels relatifs aux étiquettes préréglées.

**5.** Procédé selon la revendication 4, dans lequel fusionner (353), sur la base des caractéristiques profondes et des vecteurs de centre, l'indice de confusion interclasse et la pénalité de distance intra-classe qui appartiennent aux morceaux de données audio des cadres temporels relatifs aux étiquettes préréglées en la fonction de perte préréglée pour obtenir la perte des morceaux de données audio relatifs aux étiquettes préréglées comprend en outre :
calculer, sur la base des caractéristiques profondes via une fonction de perte d'entropie croisée, l'indice de confusion interclasse des morceaux de données audio des cadres temporels relatifs aux étiquettes préréglées.

**6.** Procédé selon la revendication 4 ou 5, dans lequel fusionner (353), sur la base des caractéristiques profondes et des vecteurs de centre, l'indice de confusion interclasse et la pénalité de distance intra-classe qui appartiennent aux morceaux de données audio des cadres temporels relatifs aux étiquettes préréglées en la fonction de perte préréglée pour obtenir la perte des morceaux de données audio relatifs aux étiquettes préréglées comprend en outre :
effectuer une pondération, dans la fonction de perte préréglée sur la base d'un poids préréglé, sur la pénalité de distance intra-classe et l'indice de confusion interclasse des morceaux de données audio relatifs aux étiquettes préréglées, pour obtenir la perte des morceaux de données audio relatifs aux étiquettes préréglées.

**7.** Procédé selon la revendication 6, dans lequel le morceau de données audio de chaque cadre temporel dans le flux de données audio est annoté avec l'une des étiquettes préréglées dans les données d'annotation.

**8.** Dispositif, comprenant :

  un processeur ; et
  une mémoire, stockant des instructions lisibles par ordinateur ;
  dans lequel les instructions lisibles par ordinateur lorsque exécutées par le processeur mettent en oeuvre le procédé selon l'une quelconque des revendications 1 à 7.

**9.** Support de stockage, comprenant un programme informatique stocké,
dans lequel le programme informatique, lorsque exécuté, met en oeuvre le procédé selon l'une quelconque des revendications 1 à 7.

**10.** Produit de programme informatique, comprenant des instructions, dans lequel : le produit de programme informatique, lorsque exécuté sur un ordinateur, configure l'ordinateur pour mettre en oeuvre le procédé selon l'une quelconque des revendications 1 à 7.

Figure 1

200

Server

270 — Central processing unit | Power supply — 210

Data — 255

Application program — 253

Operating system — 251

Storage medium — 250

Wired or wireless network interface — 231

Serial to parallel conversion interface — 233

Input/Output interface — 235

USB interface — 237

Interface — 230

Figure 2

310

Obtain an audio data stream for training a neural network for audio recognition, where the audio data stream includes pieces of audio data that correspond to multiple time frames, respectively

330

Perform feature extraction on the piece of audio data of each time frame in the audio data stream, through each layer in a neural network, to output a deep feature corresponding to each time frame

350

Fuse, for the audio data stream and based on the deep features, an inter-class confusion index and an intra-class distance penalty that are with respect to preset labels in annotation data, into a preset loss function

370

Evaluate the loss function obtained after the fusing, with respect to a series of the preset labels in the annotation data, to update a parameter of the neutral network

## Figure 3

410

Obtain, for a deep feature corresponding to a time frame, deep features of a preset quantity of time frames prior to a time frame and the deep features of the preset quantity of time frames subsequent to the time frame

430

Splice the deep feature of the time frame with the deep features of the preset quantity of time frames prior to the time frame and the deep features of the preset quantity of time frames subsequent to the time frame, to update the outputted deep feature corresponding to the time frame

## Figure 4

351

Obtain center vectors corresponding to categories to which the preset labels in the annotation data belong, wherein the center vector is configured to describe a center with respect to all deep features in a category

353

Fuse, based on deep features and the center vectors, the inter-class confusion index and the intra-class distance penalty, which are of pieces of audio data of time frames with respect to the preset labels, into the preset loss function, to obtain a loss of the pieces of audio data with respect to the preset labels

Figure 5

501

Obtain center vectors corresponding to categories, to which the preset labels in the annotation data and a blank label added into the annotation data belong

503

Calculate, based on a deep feature sequence that is formed by the deep features according to a temporal order of the audio data stream, a probability of mapping the audio data stream to labels in a preset sequence and distances of the respective labels in the preset sequence with respect to the center vector, to obtain an intra-class distance penalty of the audio data stream with respect to the labels in the preset sequence

Figure 6

371

Perform iterative training for updating a parameter in each layer of the neural network, based on a loss that is obtained through the fusing and with respect to the series of preset labels in the annotation data, until a minimum of the loss is obtained

373

Update each layer of the neural network with the parameter corresponding to the minimum loss

## Figure 7

Input speech

1010

1030

1050

Output phoneme (Training target)

Input feature

Multi-layer structure

Convolutional neural network

Max pool layer

Multi-layer structure

LSTM layer

Fully connected layer

Fusion loss function

## Figure 8

$X \cdots$

$u_t$

$a_t$

W

Lml

$\cdots$

softmax

$\Sigma$

$\lambda$

$P(s,t/l)$

Lecl

## Figure 9

1210

Data-stream
obtaining module

1230

Feature extracting
module

1250

Fusion calculating
module

1270

Updating module

Figure 10

1250

Fusion calculating module

Center-vector
obtaining unit — 1251

Loss fusing unit — 1253

Figure 11

1250

Fusion calculating module

Category-center
obtaining unit — 1301

Distance-penalty
calculating unit — 1303

Figure 12

1270

Updating module

Iterative-
training unit — 371

Parameter-
updating unit — 373

Figure 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10147442 B1

- CN 105551483 A

**Non-patent literature cited in the description**

- **LI N. et al.** Deep Discriminative Embeddings for Duration Robust Speaker Verification. *INTERSPEECH 2018,* 06 September 2018